(19)

**Europäisches Patentamt**
**European Patent Office**
**Office européen des brevets**

(11) **EP 4 130 681 B1**

(12) **EUROPEAN PATENT SPECIFICATION**

(45) Date of publication and mention
of the grant of the patent:
**27.12.2023 Bulletin 2023/52**

(21) Application number: **22188512.2**

(22) Date of filing: **03.08.2022**

(51) International Patent Classification (IPC):
***G01D 5/12*** *(2006.01)*

(52) Cooperative Patent Classification (CPC):
**G01D 5/24438**

(54) **ABSOLUTE MAGNETIC ENCODER AND SETTING METHOD**

ABSOLUTE MAGNETISCHE ENCODER UND EINSTELLMETHODE

CODEUR MAGNÉTIQUE ABSOLU ET PROCÉDÉ DE RÉGLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2021 JP 2021127847**
**01.08.2022 JP 2022122842**

(43) Date of publication of application:
**08.02.2023 Bulletin 2023/06**

(73) Proprietor: **Uchiyama Manufacturing Corp.**
**Okayama-shi, Okayama 702-8004 (JP)**

(72) Inventors:
• **ISHIDA, Koki**
**Akaiwa-shi, Okayama 701-2221 (JP)**

• **SENO, Hiroshi**
**Akaiwa-shi, Okayama 701-2221 (JP)**
• **MORITOKI, Nao**
**Akaiwa-shi, Okayama 701-2221 (JP)**

(74) Representative: **Vossius & Partner**
**Patentanwälte Rechtsanwälte mbB**
**Siebertstraße 3**
**81675 München (DE)**

(56) References cited:
**EP-A1- 2 579 002      EP-A1- 2 887 024**
**FR-A1- 2 930 637**

**Description**

BACKGROUND ART

Field of the invention

The present invention relates to an absolute magnetic encoder and a setting method of the absolute magnetic encoder.

Description of the Related Art

Conventionally, in the fields of automobiles and other industrial machinery, absolute magnetic encoders are used for detecting rotation, rotation speed, absolute angle, and the like of rotating portions. Such an absolute magnetic encoder is provided with a plurality of magnetic tracks having different numbers of the magnetic poles, the magnetic flux density of each magnetic track is detected by a plurality of magnetism detection elements arranged corresponding to each track, and the absolute position and the absolute angle are detected.

As an absolute magnetic encoder for detecting the absolute angle, a well-known configuration includes annular magnetic tracks arranged concentrically around a rotary shaft and having magnetic poles alternately arranged at equal intervals in the circumferential direction, and a magnetism detection element is arranged opposite to the magnetic track in the rotary shaft direction, referring to, for example, Patent Documents 1-3. EP2579002 A1 discloses a magnetic encoder with tracks that are configured such that the magnetic patterns thereof acting on position of the corresponding sensor are, under the interference of magnetism of the plural rows of magnetic encoder tracks, detected by the corresponding sensor as an equal pitch magnetic pattern.

In addition, being different from the absolute magnetic encoder, a magnetic encoder employing a similar magnetic track configuration as a magnetic encoder that extracts a plurality of different pulse signals from a single rotary body by a similar configuration has also been proposed, referring to, for example, Patent Document 4.

Related Art

Patent Documents

Patent Document 1:
Japanese Unexamined Patent Application Publication No. 2009-265099
Patent Document 2:
Japanese Unexamined Patent Application Publication No. 2011-080776
Patent Document 3:
Japanese Unexamined Patent Application Publication No. H10-170212
Patent Document 4:
Japanese Unexamined Patent Application Publication No. H9-311053

SUMMARY OF THE INVENTION

Problems to be solved ty the Invention

In a configuration in which annular magnetic tracks of which magnetic poles are alternately arranged at equal intervals in the circumferential direction are arranged concentrically as disclosed in the above-mentioned Patent Documents, the circumferential size of one magnetic pole (magnet) included in the magnetic track arranged outside and the circumferential size of one magnetic pole (magnet) of the magnetic track arranged inside are different due to the difference in diameter. Since the amount of magnetization differs when the circumferential size of one magnetic pole is different from the rest of the poles, the magnitude of the magnetic flux density (maximum magnetic flux density) of each magnetic track to be detected by the magnetism detection element arranged opposite to the magnetic track is also different from each other. A plurality of magnetism detection elements arranged corresponding to each magnetic track often have the same performance in sensitivity, and from the viewpoint of improving detection accuracy, it is preferable that the magnetic flux density (maximum magnetic flux density) of each magnetic track to be detected by the magnetism detection element be almost the same.

The present invention has been made in view of the above-mentioned problems and has an object to provide an absolute magnetic encoder and a method for setting the absolute magnetic encoder capable of further improving detection accuracy in which a plurality of annular magnetic tracks are arranged concentrically around a rotary shaft and a magnetism detection element is arranged opposite to the annular magnetic tracks in the rotary shaft direction.

Means to solve the Problems

In order to achieve the above-mentioned object, the embodiment of the present invention employs the following technical means. The absolute magnetic encoder according to one embodiment of the present invention includes a first magnetic track, a second magnetic track, a magnetic sensor unit, a first detected face, a second detected face, and level difference. The first magnetic track is constituted with an annular multipolar magnet in which magnetic poles are alternately arranged at equal intervals in the circumferential direction. The second magnetic track is constituted with an annular multipolar magnet in which magnetic poles, the number of which being different from that of the first magnetic track, are alternately arranged at equal intervals in the circumferential direction. The second magnetic track is provided concentrically with the first magnetic track inside the first magnetic track in the radial direction. The magnetic sensor unit is provided so as to oppose the first magnetic track in the axial direction of the first magnetic track and the second magnetic track in the axial direction of the second magnetic track and to be relatively movable to each of the first and the second magnetic tracks. The magnetic sensor unit respectively detects the magnetic flux density of the first magnetic track and the magnetic flux density of the second magnetic track. The first detected face is a magnetic pole face of the first magnetic track opposite to the magnetic sensor unit. The second detected face is a magnetic pole face of the second magnetic track opposite to the magnetic sensor unit. The level difference is set based on the difference between the maximum magnetic flux density of the first magnetic track and the maximum magnetic flux density of the second magnetic track which are detected by the magnetic sensor unit, and the level difference is constituted in the axial direction between the first detected face and the second detected face.

In such a configuration that a plurality of magnetic tracks are arranged concentrically around the rotary shaft, it is preferable to make the maximum magnetic flux densities of the magnetic tracks to be detected by a magnetism detection element almost the same in view of improving detection accuracy. According to the above-mentioned configuration, the detected face of the first magnetic track and the detected face of the second magnetic track are arranged at different positions in the axial direction which are set based on the difference between the maximum magnetic flux density of the first magnetic track and the maximum magnetic flux density of the second magnetic track which are detected by the magnetic sensor unit, so that the magnitude of the maximum magnetic flux densities of both magnetic tracks to be detected in the magnetic sensor unit are made almost the same.

The above-mentioned absolute magnetic encoder employs a configuration in which an end portion on the inner diameter side of the first magnetic track and an end portion on the outer diameter side of the second magnetic track are arranged in a contact condition. In such a configuration, for example, allowable range of the change in the relative position of the first and the second magnetic tracks and the magnetic sensor increases when axial runout occurs on the rotary shaft for relatively moving the first and the second magnetic tracks and the magnetic sensor unit, or when positional runout occurs in the mounting positions of the magnetic tracks and the magnetic sensor unit. There is no gap between the first magnetic track and the second magnetic track, so that the radial width of each magnetic track is increased. Combining these effects, when the magnetic sensor unit in which a plurality of magnetism detection elements are integrally arranged is used, the application flexibility of the magnetic sensor unit increases, so that, for example, a smaller magnetic sensor unit is employed.

In the above-mentioned absolute magnetic encoder, the first magnetic track and the second magnetic track can be respectively constituted with a separated multipolar magnet made of magnetic rubber material. When the first magnetic track and the second magnetic track are supported by a single support member, the first detected face and the second detected face are configured. In such a configuration, after the magnetization treatment for forming the first magnetic track and the magnetization treatment for forming the second magnetic track are separately performed, the first magnetic track and the second magnetic track are assembled integrally, so that the magnetic poles of the magnetic track formed in advance do not interfere with the magnetization treatment for the subsequent magnetic track formation. As a result, manufacturing is facilitated.

In the above-mentioned configuration, the dimension of the level difference can be set in such a manner that the difference between the maximum magnetic flux density of the first magnetic track and the maximum magnetic flux density of the second magnetic track is within a predetermined range. In addition, in the above-mentioned configuration, an end portion on the inner diameter side of the first magnetic track can be provided so as to come into contact with an end portion on the outer diameter side of the second magnetic track. Further, in the above-mentioned configuration, the first magnetic track and the second magnetic track can be separately constituted with a multipolar magnet made of magnetic rubber material; the first detected face and the second detected face can be configured in such a manner that the first magnetic track and the second magnetic track are supported by a single support member.

In the above-mentioned absolute magnetic encoder, the maximum magnetic flux density of the first magnetic track and the maximum magnetic flux density of the second magnetic track can be calculated by the following equation (1),

$$B = Bo\exp(-n \cdot x/d) \quad (1)$$

in which "B" is magnetic flux density, "Bo" is residual magnetic flux density, "n" is total number of poles, "x" is an air gap between the detected face and the magnetic sensor unit, and "d" is a diameter where a magnetism detection element of the magnetic sensor unit is provided.

In the above-mentioned configuration, the dimension of the level difference (positional difference) between the detected faces can be set in such a manner that the magnitudes of the magnetic flux densities of both magnetic tracks to be detected by the magnetic sensor unit are set to be almost the same. In the above-mentioned configuration, the dimension of the level difference can be set based on the difference between an air gap "x1" relative to the first detected face and an air gap "x2" relative to the second detected face in which the difference between the maximum magnetic flux density of the first magnetic track and the maximum magnetic flux density of the second magnetic track is within a predetermined range. Further, in the above-mentioned configuration, the total number of each pole of the first magnetic track can be "m" and the total number of each pole of the second magnetic track can be "m-2". In such a configuration, the difference between the size of one magnetic pole included in the first magnetic track and the size of one magnetic pole included in the second magnetic track is made small, so that the positional difference between the first detected face and the second detected face in the axial direction is reduced. As a result, the air gap between the detected face and the magnetic sensor unit is set to be small.

The method for setting the absolute magnetic encoder in the embodiment of the present invention is a setting method of the absolute magnetic encoder including the first magnetic track constituted with the annular multipolar magnet in which the magnetic poles are alternately provided at equal intervals in the circumferential direction, the second magnetic track constituted with the annular multipolar magnet in which the magnetic poles are alternately provided at equal intervals in the circumferential direction, the number of the poles being different from that of the first magnetic track, the second magnetic track being provided concentrically with the first magnetic track inside the first magnetic track in the radial direction, and the magnetic sensor unit to respectively detect the magnetic flux density of the first magnetic track and the magnetic flux density of the second magnetic track, the magnetic sensor being provided opposite to the first magnetic track in the axial direction of the first magnetic track and opposite to the second magnetic track in the axial direction of the second magnetic track, the magnetic sensor unit being provided so as to be relatively movable to each of the first magnetic track and the second magnetic track. The method includes a step of obtaining the maximum magnetic flux density of the first magnetic track which is detected by position of the magnetic sensor unit, a step of obtaining the maximum magnetic flux density of the second magnetic track which is detected by position of the magnetic sensor unit, and a step of setting the level difference in the axial direction between the first detected face of the first magnetic track and the second detected face of the second magnetic track based on the difference between the obtained maximum magnetic flux density of the first magnetic track and the obtained maximum magnetic flux density of the second magnetic track, the first detected face being the magnetic pole face of the first magnetic track opposite to the magnetic sensor unit, the second detected face being the magnetic pole face of the second magnetic track opposite to the magnetic sensor unit.

In the above-mentioned method, the dimension of the level difference can be set in such a manner that the difference between the maximum magnetic flux density of the first magnetic track and the maximum magnetic flux density of the second magnetic track is within a predetermined range.

The maximum magnetic flux density of the first magnetic track and the maximum magnetic flux density of the second magnetic track can be calculated by the following equation (2),

$$B = Bo\exp(-n \cdot x/d) \quad (2)$$

in which "B" is magnetic flux density, "Bo" is residual magnetic flux density, "n" is total number of the poles, "x" is an air gap between the detected face and the magnetic sensor unit, and "d" is a diameter where the magnetism detection element of the magnetic sensor unit is provided.

In the above-mentioned method, the dimension of the level difference can be set based on the difference between the air gap "x1" relative to the first detected face and the air gap "x2" relative to the second detected face in which the difference between the maximum magnetic flux density of the first magnetic track and the maximum magnetic flux density of the second magnetic track is within a predetermined range.

Effect of the invention

According to the embodiments of the present invention, the detection accuracy is further improved in the absolute magnetic encoder configured such that a plurality of annular magnetic tracks are arranged concentrically around the rotary shaft and the magnetism detection element is arranged opposite to the rotary shaft direction.

BRIEF DESCRIPTION OF THE DRAWINGS

FIG. 1A is a plan view (a view seen from the magnetic sensor unit side) diagrammatically illustrating an example of an absolute magnetic encoder according to an embodiment of the present invention, and FIG. 1B is a longitudinal sectional view diagrammatically illustrating the example of the absolute magnetic encoder according to the embodiment of the present invention.

FIG. 2 is a plan view diagrammatically illustrating the example of a magnetic pole arrangement of the magnetic track provided for the absolute magnetic encoder according to the embodiment of the present invention.

FIG. 3 is an enlarged longitudinal sectional view diagrammatically illustrating the magnetic track provided for the absolute magnetic encoder according to the embodiment of the present invention.

FIG. 4A and FIG. 4B are enlarged longitudinal sectional views diagrammatically illustrating axial runout resistance of the absolute magnetic encoder according to the embodiment of the present invention.

FIG. 5A and FIG. 5B are enlarged longitudinal sectional views diagrammatically illustrating another example of the magnetic track provided for the absolute magnetic encoder according to the embodiment of the present invention.

DETAILED DESCRIPTION

The absolute magnetic encoder according to one embodiment of the present invention is applicable to, but not limited to, a rotation detection device or the like for controlling rotation of various motors. Hereinafter, embodiments of the present invention are described in detail with reference to the drawings. In the magnetic encoder, for detecting the rotation of the rotary body relative to a fixed body, it is enough that a magnetic scale and a magnetic sensor unit (magnetism detection element) are relatively movable, and it is configured such that the magnetic scale is provided for either the fixed body or the rotary body and the magnetic sensor unit is provided for the other of them. In the following description, the present invention is embodied by the case in which the magnetic scale is provided for the rotary body and the magnetic sensor unit is provided for the fixed body.

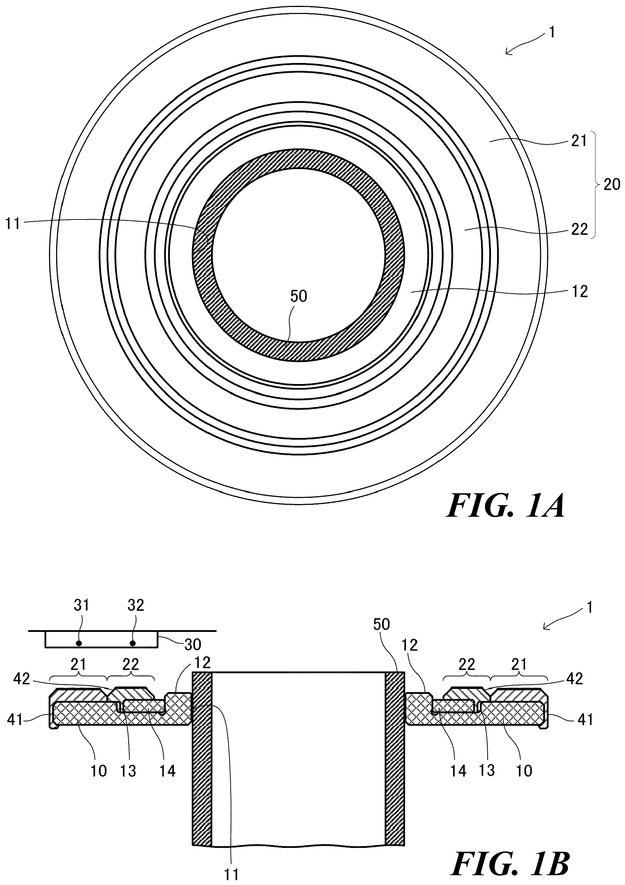

FIG. 1A is a plan view diagrammatically illustrating the example of the absolute magnetic encoder in one embodiment of the present invention. FIG. 1B is a longitudinal sectional view diagrammatically illustrating the example of the absolute magnetic encoder in the embodiment of the present invention. FIG. 1C is a longitudinal sectional view along the diametrical direction in FIG. 1A.

As illustrated in FIGs. 1A and 1B, an absolute magnetic encoder 1 according to the embodiment of the present embodiment is axial type, and includes a disk-like core member 10 having a through hole 11 in the center, and an annular magnetic scale 20 arranged on one side in the axial direction of the core member 10. The magnetic scale 20 includes a first magnetic track 21 and a second magnetic track 22 which are concentrically provided in parallel. In the embodiment of the present invention, the first magnetic track 21 that functions as a main track is arranged outside in the radial direction, and the second magnetic track 22 that functions as a sub track is arranged inside the first magnetic track 21 in the radial direction. In the embodiment of the present invention, since the rotary shaft being a target of which rotation is detected, hereinafter called as a detection target, is fitted under pressure to the through hole 11, the axial direction of the core member 10, the axial direction of the first magnetic track 21, and the axial direction of the second magnetic track 22 are all the same as the axial direction of the rotary shaft, to be mentioned later. In FIG. 1B, the axial direction is the vertical direction.

The first magnetic track 21 and the second magnetic track 22 are respectively configured by multipolar magnets in which magnetic poles (N poles and S poles) are alternately arranged at equal intervals in the circumferential direction. The number of the magnetic poles of the first magnetic track 21 and that of the second magnetic track 22 are different, and the number of the magnetic poles of the second magnetic track 22 is set to be less than that of the first magnetic track 21 in the embodiment of the present invention.

As illustrated in FIG. 1B, the core member 10 includes a cylindrical portion 12 around the through hole 11; the axial thickness of the cylindrical portion 12 is larger than other portions in the embodiment of the present invention. The cylindrical portion 12 functions as an attachment portion to a rotary shaft 50 which is the detection target. In the embodiment of the present invention, the inner diameter of the cylindrical portion 12 is formed slightly smaller than the outer diameter of the rotary shaft 50 which is the detection target, and the core member 10 is attached to the rotary shaft 50 by press-fitting.

The core member 10 includes a groove portion 13 formed throughout the circumferential direction in a predetermined area in the radial direction from the outer edge of the cylindrical portion 12. The groove portion 13 is fitted by a ring-like member 14 that matches the groove portion 13. The ring-like member 14 functions as a support member supporting the second magnetic track 22. Although it is not especially limited, the inner diameter of the ring-like member 14 is formed slightly smaller than the outer diameter of the cylindrical portion 12, and the ring-like member 14 is connected to the core member 10 by press-fitting. Although it is not especially limited, the core member 10 and the ring-like member 14 are made of magnetic metals such as SPCC and SUS430, for example.

Although it is not especially limited, in the embodiment of the present invention, the first magnetic track 21 and the second magnetic track 22 are constituted with rubber magnets made of a magnetic rubber material such as a rubber material containing magnetic powder. In the embodiment of the present invention, a rubber magnet 41 constituting the first magnetic track 21 is provided for the core member 10 so as to cover the outer edge end of the core member 10 and the outer edge region of the other face of the core member 10 from the position outside in the radial direction further than the groove portion 13. Although it is not especially limited, in the embodiment of the present invention, the rubber magnet 41 is fixed to the core member 10 by vulcanized adhesion. That is, the core member 10 functions as a support member supporting the first magnetic track 21. In the rubber magnet 41, the first magnetic track 21 is configured such that the annular region on one face side of the core member 10 is magnetized as a multipolar magnet in which the N poles and the S poles are alternately arranged at equal intervals in the circumferential direction, as mentioned above.

Further, a rubber magnet 42 constituting the second magnetic track 22 is provided for the ring-like member 14 so as to cover the outer edge end of the ring-like member 14 and the outer edge region of the other face of the ring-like member 14 from the outside in the radial direction further than the end portion of the ring-like member 14 on the side of the cylindrical portion 12. Further, on one face side of the core member 10, the rubber magnet 42 extends from the outer edge end of the ring-like member 14 to the end portion on the inner diameter side of the rubber magnet 41 constituting the second magnetic track 22, and is arranged such that the entire circumference of the rubber magnet 42 on the end portion on the outer diametrical side comes into contact with the entire circumference of the rubber magnet 41 on the end portion on the inner diametrical side. Although it is not especially limited, in the embodiment of the present invention, the rubber magnet 42 is fixed to the ring-like member 14 by vulcanized adhesion. In the embodiment of the present invention, tapers are provided at the end portion on the inner diameter side and the end portion on the outer diameter side of the first magnetic track 21 and the second magnetic track 22, but the tapers are not essential elements.

In the rubber magnet 42, the annular portion located on one face side of the core member 10 is magnetized as a multipolar magnet in which the N poles and the S poles are alternately arranged at equal intervals in the circumferential direction, and the second magnetic track 22 is constituted, as mentioned above. In the embodiment of the present invention, the rubber magnet 42 is magnetized while being fixed to the ring-like member 14, and the rubber magnet 42 is attached to the core member 10 in which the first magnetic track 21 having been magnetized is arranged together with the ring-like member 14 after magnetization. That is, after the magnetization treatment for forming the first magnetic track 21 and the magnetization treatment for forming the second magnetic track 22 are separately performed, the two magnetic tracks 21, 22 are assembled integrally. By adopting such a configuration, the magnetic poles of the previously formed magnetic track are prevented from interfering with the magnetization treatment of the subsequent magnetic track formation. Therefore, magnetization of the multipolar magnets respectively constituting the first magnetic track 21 and the second magnetic track 22 is performed with high accuracy, thereby facilitating manufacturing. In addition, any known method can be used for magnetization of the rubber magnet 41 and the rubber magnet 42.

As illustrated in FIG. 1B, a magnetic sensor unit 30 is provided for a fixed body at position opposite to each of the first magnetic track 21 and the second magnetic track 22 in the axial direction. The magnetic sensor unit 30 is configured such that a magnetism detection element 31 and a magnetism detection element 32 are integrated. Here, the integrated configuration means that the magnetism detection element 31 and the magnetism detection element 32 are handled as a single member without requiring respective positional adjustment when the magnetism detection element 31 and the magnetism detection element 32 are separately provided, for example, the magnetism detection element 31 and that the magnetism detection element 32 are installed in a single housing. The magnetism detection element 31 is arranged at position opposite to the first magnetic track 21 and detects the magnetic flux density of the first magnetic track 21. The magnetism detection element 32 is arranged at position opposite to the second magnetic track 22 and detects the magnetic flux density of the second magnetic track 22. Therefore, the magnetic sensor unit 30 is capable of independently detecting the magnetic flux density of the first magnetic track 21 and the magnetic flux density of the second magnetic track 22.

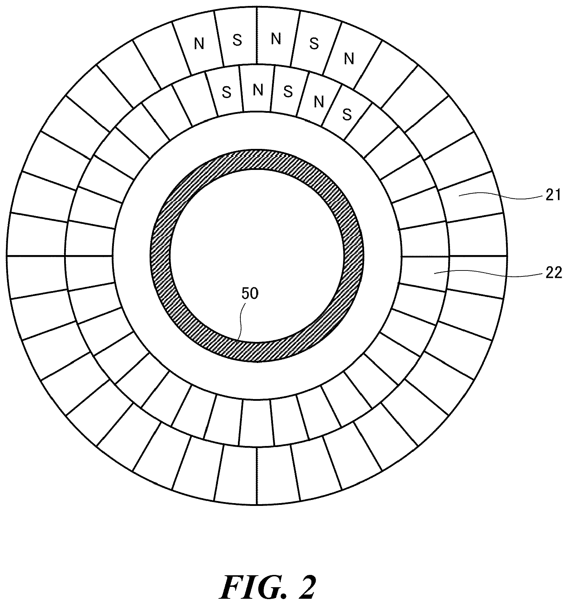

FIG. 2 is a plan view diagrammatically illustrating an example of the magnetic pole arrangement of the magnetic track provided for the absolute magnetic encoder according to the embodiment of the present invention. In FIG. 2, the N poles and the S poles are displayed on only a part of the magnetic poles, but the N poles and the S poles are alternately arranged at equal intervals in the circumferential direction on the first magnetic track 21 and the second magnetic track 22, as mentioned above.

In the example illustrated in FIG. 2, the total number of the poles of the first magnetic track 21 is 36 (18 pairs of poles), and the total number of the poles of the second magnetic track 22 is 34 (17 pairs of poles). According to such a configuration, while the rotary shaft 50 rotates once, periodic signals corresponding to the 18 pairs of poles are output from the magnetism detection element 31 corresponding to the magnetic track 21, and periodic signals corresponding to the 17 pairs of poles are output from the magnetism detection element 32 corresponding to the magnetic track 22. As is well known, the phase difference of the output signals becomes from zero degrees to 360 degrees while the rotary shaft 50 rotates once, so that the absolute angle of rotation is detected.

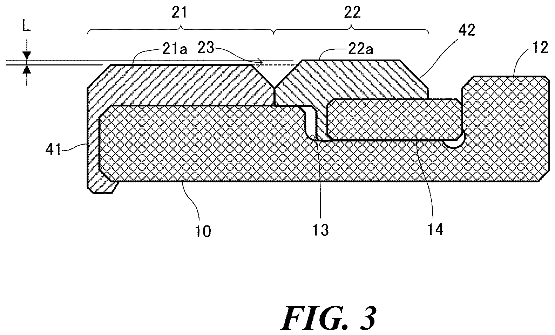

FIG. 3 is an enlarged longitudinal sectional view diagrammatically illustrating the magnetic track provided for the absolute magnetic encoder according to one embodiment of the present invention. FIG. 3 corresponds to a portion located on the left side of the rotary shaft 50 in FIG. 1B.

As illustrated in FIG. 3, in the absolute magnetic encoder 1 of the embodiment of the present invention, a first detected face 21a (a face to be detected), which is a pole face opposite to the magnetic sensor unit 30, of the first magnetic track 21 and the second detected face 22a (a face to be detected), which is a pole face opposite to the magnetic sensor unit 30, of the second magnetic track 22 are arranged at different positions in the axial direction, thereby providing level difference 23. The dimension L of the level difference 23, i.e., positional difference, in the positions along the axial direction between the first detected face 21a and the second detected face 22a is set based on the difference between the maximum magnetic flux density of the first magnetic track 21 to be detected by the magnetism detection element 31 of the magnetic sensor unit 30 and the maximum magnetic flux density of the second magnetic track 22 to be detected by the magnetism detection element 32 of the magnetic sensor unit 30. The absolute magnetic encoder 1 of the embodiment of the present invention employs a setting method having the following steps. The setting method includes a step of obtaining the maximum magnetic flux density of the first magnetic track 21 which is detected by position of the magnetic sensor unit 30 and a step of obtaining the maximum magnetic flux density of the second magnetic track 22 which is detected by position of the magnetic sensor unit 30. The setting method also includes a step of setting the level difference 23 in the axial direction between the first detected face 21a, being the magnetic pole face opposite to the magnetic sensor unit 30, of the first magnetic track 21 and the second detected face 22a, being the magnetic pole face opposite to the magnetic sensor unit 30, of the second magnetic track 22, based on the difference between the obtained maximum magnetic flux density of the first magnetic track 21 and the obtained maximum magnetic flux density of the second magnetic track 22.

In a configuration in which a plurality of magnetic tracks 21, 22 are arranged concentrically around the rotary shaft 50 as illustrated in FIG. 1A, it is preferable to set the maximum magnetic flux densities of each magnetic track to be detected by the magnetism detection elements 31, 32 almost the same in view of improving detection accuracy. As in the embodiment of the present invention, the first detected face 21a and the second detected face 22a are arranged at different positions in the axial direction, and the dimension L of the level difference 23, i.e., the positional difference, is set as mentioned above, so that the magnitudes of the maximum magnetic flux densities of both magnetic tracks 21, 22 to be detected in the magnetic sensor unit 30 are made almost the same.

Here, the magnetic flux density of the first detected face 21a and the magnetic flux density of the second detected face 22a are expressed by the following equation (1) using the residual magnetic flux density Bo, the total pole number "n", the air gap "x" between the detected face and the magnetic sensor unit, and the diameter "d" in which the magnetism detection element of the magnetic sensor unit 30 is disposed.

$$B = Bo \exp(-n \cdot x / d) \qquad (1)$$

That is, the dimension L of the level difference 23, i.e., the positional difference, in position in the axial direction between the first detected face 21a and the second detected face 22a is set based on the difference of the air gap "x" in which the difference between the magnetic flux density (the maximum magnetic flux density) of the first detected face 21a and the magnetic flux density (the maximum magnetic flux density) of the second detected face 22a which are calculated by the equation (1) is within a predetermined range.

From the equation (1), it is understood that the maximum magnetic flux density $B1_{max}$ of the first detected face 21a, the total pole number n1, the air gap x1 between the first detected face 21a and the magnetism detection element 31 of the magnetic sensor unit 30, and the diameter d1 in which the magnetism detection element 31 is arranged satisfy the following equation (2).

$$x1 = -(d1 / n1) \ln(B1_{max} / Bo) \qquad (2)$$

Similarly, from the equation (1), it is understood that the maximum magnetic flux density $B2_{max}$ of the second detected face 22a, the total pole number n2, the air gap x2 between the second detected face 22a and the magnetism detection element 32, and the diameter d2 in which the magnetism detection element 32 is arranged satisfy the following

equation (3).

$$x2 = - \ (d2 \, / \, n2) \ \ln \ (B2_{max} / Bo) \qquad (3)$$

The range specified in advance for the difference D between the maximum magnetic flux density of the first detected face 21a and the maximum magnetic flux density of the second detected face 22a is supposed to be, for example, the maximum value $D_H$ or less. In such a case, the air gap $x2_L$ when $B2_{max} = B1_{max} - D_H$ and the air gap $x2_H$ when $B2_{max} = B1_{max} + D_H$ are calculated in the equation (3), so that the range of the dimension L of the level difference 23, i.e., the positional difference, along the axial direction between the first detected face 21a and the second detected face 22a is set based on the difference between x1 calculated by the equation (2) and $x2_L$ and the difference between x1 and $x2_H$. The specific value of the maximum value $D_H$ is not generalized because it depends on the performance such as sensitivity of the magnetic sensor unit 30, the size of the air gap, the magnetization amount of both magnetic tracks 21, 22, etc., but a value in which the magnitudes of the maximum magnetic flux densities of magnetic tracks 21, 22 to be detected in the magnetic sensor unit 30 practically accord can be appropriately set.

As mentioned above, the magnitudes of the maximum magnetic flux densities of two magnetic tracks 21, 22 to be detected in the magnetic sensor unit 30 are set almost the same by setting the range of the dimension L of the level difference 23, i.e., the positional difference, along the axial direction between the first detected face 21a and the second detected face 22a.

On the other hand, in the absolute magnetic encoder 1 of the embodiment of the present invention, a preferred embodiment adopts a configuration such that the end portion on the inner diameter side of the first magnetic track 21 and the end portion of the outer diameter side of the second magnetic track 22 are arranged so as to come into contact with each other, as mentioned above. That is, a configuration that does not provide a gap between the first magnetic track 21 and the second magnetic track 22 is adopted. With such a configuration, the allowable range for changes in the relative positions between the first and the second magnetic tracks 21, 22 and the magnetic sensor unit 30 is increased. Specific examples of changes in the relative position include axial runout of the rotary shaft of the first magnetic track 21 and the second magnetic track 22, and a position deviation of the mounting positions of the first and the second magnetic tracks 21, 22 and the magnetic sensor unit 30. Hereinafter, the effects are described with reference to the axial runout of the rotary shaft of the first magnetic track 21 and the second magnetic track 22 as an example.

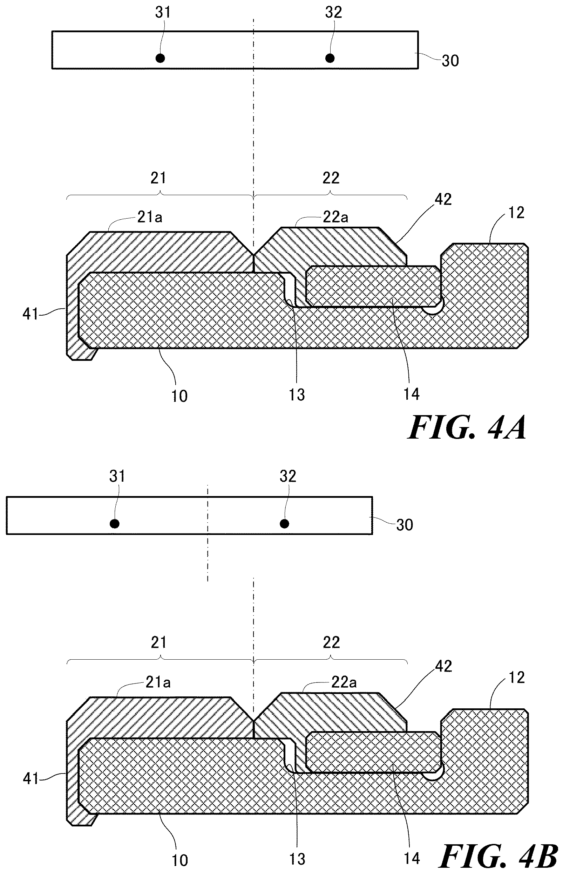

FIG. 4 is an enlarged longitudinal sectional view diagrammatically illustrating the axial runout resistance of the absolute magnetic encoder according to one embodiment of the present invention. FIG. 4A corresponds to a case in which the magnetic sensor unit 30 is disposed at a design position. FIG. 4B corresponds to a case in which the axial runout of the rotary shaft of the first magnetic track 21 and the second magnetic track 22 occurs. It is impossible to avoid occurrence of axial runout of the rotary shaft as long as clearance is set for the machining accuracy and the assembly accuracy of the rotary shaft.

As mentioned above, in the absolute magnetic encoder 1 of the present embodiment, since there is no gap between the first magnetic track 21 and the second magnetic track 22, the radial width of each magnetic track is increased. Therefore, for example, as illustrated in FIG. 4B, even if axial runout occurs such that the rotary shaft moves from the magnetic sensor unit to the shaft side (right direction in the figure), the magnetism detection element 31 and the magnetism detection element 32 are located above the corresponding first magnetic track 21 and the second magnetic track 22. That is, the axial runout resistance is further improved compared with a configuration in which a gap is provided between the first magnetic track 21 and the second magnetic track 22. Further, when using a magnetic sensor unit in which a plurality of magnetism detection elements are integrally disposed, as a result of being able to increase the application flexibility of the magnetic sensor unit, a smaller magnetic sensor unit is able to be adopted, for example.

In the above-mentioned embodiment, a configuration in which the total number of each type of pole of the first magnetic track 21 is m (m = 36) and the total number of each type of pole of the second magnetic track 22 is (m-2) is described. In such a configuration, since the difference in size between one magnetic pole included in the first magnetic track 21 and one magnetic pole included in the second magnetic track 22 is reduced, the dimension L of the level difference 23, i.e., the positional difference, in the axial direction between the first detected face 21a and the second detected face 22a is reduced. As a result, the air gap between the detected faces 21a, 22a and the magnetic sensor unit 30 is set to be smaller. However, the total number of each type of pole of the first magnetic track 21 and the total number of each type of pole of the second magnetic track 22 are only required to be different, and it is not essential to satisfy such a relation.

As mentioned above, according to the absolute magnetic encoder 1 of the embodiment of the present invention, since the magnitudes of the maximum magnetic flux densities of two magnetic tracks 21, 22 to be detected in the magnetic sensor unit 30 are made almost the same, the detection accuracy is further improved.

In the embodiment mentioned above, a ring-like member 14 on which the second magnetic track 22 is supported is connected to the core 10 on which the first magnetic track 21 is supported as a preferred embodiment. However, the first magnetic track 21 and the second magnetic track 22 are required to be arranged in such a manner that the first detected face 21a and the second detected face 22a are arranged with the dimension L of the level difference 23, i.e., the positional difference, as mentioned above, and the first magnetic track 21 and the second magnetic track 22 are not have to be supported by separate support members.

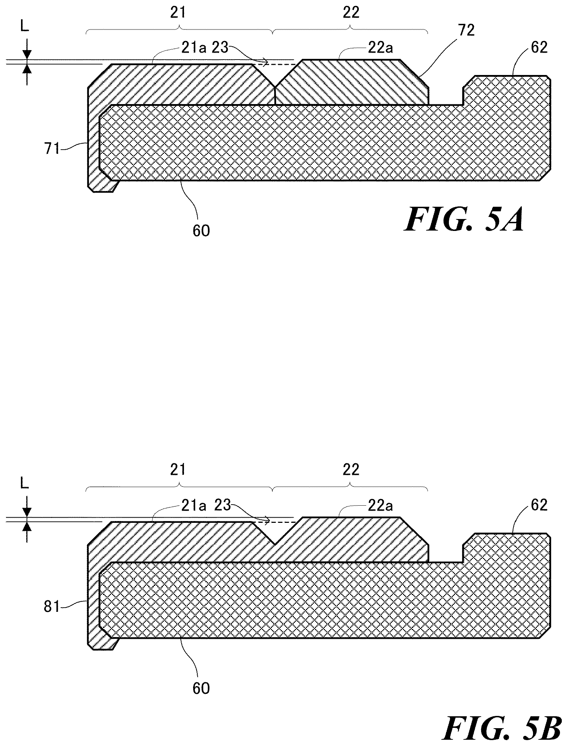

FIGs. 5A, 5B are enlarged longitudinal sectional views diagrammatically illustrating another example of the magnetic tracks provided for the absolute magnetic encoder according to the embodiment of the present invention. FIGs. 5A, 5B are diagrams corresponding to the enlarged longitudinal sectional view illustrated in FIG. 3, and such a shape is continuous throughout the circumferential direction as in FIG. 3. Although FIGs. 5A, 5B illustrate a different shape, the same reference signs are used for the magnetic tracks having similar functions to the magnetic tracks 21, 22 of the absolute magnetic encoder 1 mentioned above. In the absolute magnetic encoder 1 in this embodiment of the present invention, the same setting method as the absolute magnetic encoder 1 illustrated in FIG.1 is employed.

The above-mentioned embodiment exemplifies a configuration in which the core member 10 includes the groove portion 13, but in the embodiment in FIGs. 5A, 5B, a core member 60 is different in that it does not include a groove portion. That is, the core member 60 has the same thickness from the end portion on the outer diameter side of a cylindrical portion 62 to the outer edge end portion. In the embodiment in FIG. 5A, a rubber magnet 71 having the same shape as the above-mentioned rubber magnet 41 is arranged so as to cover a part of one face of the core member 60, the outer edge end of the core member 60, and the outer edge portion of the other face of the core member 60. Further, a rubber magnet 72 in which the face on the core member side of the above-mentioned rubber magnet 42 is changed to be flat is arranged such that the entire circumference of the end portion on the outer diameter side of the rubber magnet 72 is in contact with the entire circumference of the end portion on the inner diameter side of the rubber magnet 71. That is, the core member 60 functions as a single support member supporting the first magnetic track 21 and the second magnetic track 22. In such a configuration, since the rubber magnet 71 constituting the first magnetic track 21 and the rubber magnet 72 constituting the second magnetic track 22 are constituted with separate bodies, the above-mentioned dimension L of the level difference 23, i.e., the positional difference, is flexibly set. On the other hand, in the case illustrated in FIG. 5B, the above-mentioned rubber magnet 71 and the rubber magnet 72 are realized as an integrated rubber magnet 81. With such a configuration, assembly is facilitated because the number of parts is small. Even in the configuration illustrated in FIGs. 5A, 5B, the same effects as those of the absolute magnetic encoder 1 in the above-mentioned embodiment are achieved by appropriately achieving the dimension L of the level difference 23, i.e., the positional difference.

As mentioned above, according to the embodiments of the present invention, the detection accuracy is further improved in the absolute magnetic encoder having a configuration in which a plurality of annular magnetic tracks arranged concentrically around the rotary shaft and the magnetism detection elements are arranged opposite in the rotary shaft direction.

The above-mentioned embodiments do not limit the technical scope of the present invention, and various modifications and applications are made within the scope of the present invention other than those described as above. For example, the preferable embodiment of the above-mentioned embodiment is configured such that the end portion on the inner diameter of the first magnetic track 21 and the end portion on the outer diameter side of the second magnetic track 22 come into contact. However, the present invention does not exclude a configuration such that a gap is provided between the end portion on the inner diameter side of the first magnetic track 21 and the end portion on the outer diameter side of the second magnetic track 22. Further, the physical shape of each element mentioned above, including a rubber magnet, is arbitrarily modified within the range that achieves the effect of the present invention.

Description of the Reference Numeral

| | |
|---|---|
| 1 | absolute magnetic encoder |
| 10, 60 | core member (support member) |
| 14 | ring-like member (support member) |
| 21 | first magnetic track |
| 21a | first detected face |
| 22 | second magnetic track |
| 22a | second detected face |
| 23 | level difference |
| 30 | magnetic sensor unit |
| 31, 32 | magnetism detection elements |
| 41, 42, 71, 72, 81 | rubber magnets |
| L | dimension of the level difference (positional difference) in the axial direction between the first |

detected face and the second detected face

**Claims**

1.  An absolute magnetic encoder (1) comprising:

    a first magnetic track (21) comprising an annular multipolar magnet in which magnetic poles are alternately provided at equal intervals in circumferential direction;
    a second magnetic track (22) comprising an annular multipolar magnet in which magnetic poles are alternately provided at equal intervals in circumferential direction, number of magnetic poles of the second magnetic track (22) being different from number of magnetic poles of the first magnetic track (21), the second magnetic track (22) being provided concentrically with the first magnetic track (21) inside the first magnetic track (21) in radial direction;
    a magnetic sensor unit (30) to respectively detect magnetic flux density of the first magnetic track (21) and magnetic flux density of the second magnetic track (22), the magnetic sensor unit (30) being provided opposite to the first magnetic track (21) in axial direction of the first magnetic track (21) and opposite to the second magnetic track (22) in axial direction of the second magnetic track (22), the magnetic sensor unit (30) being provided relatively movable to the first magnetic track (21) and the second magnetic track (22) respectively;
    a first detected face (21a) that is a magnetic pole face of the first magnetic track (21) opposite to the magnetic sensor unit (30); and
    a second detected face (22a) that is a magnetic pole face of the second magnetic track (22) opposite to the magnetic sensor unit (30);
    wherein the first detected face (21a) and the second detected face (22a) are provided with level difference (23) in axial direction,
    **characterised in that**
    the level difference (23) is set based on difference between maximum magnetic flux density of the first magnetic track (21) and maximum magnetic flux density of the second magnetic track (22) which are detected by the magnetic sensor unit (30).

2.  The absolute magnetic encoder (1) according to claim 1, wherein dimension (L) of the level difference (23) is set in such a manner that difference between the maximum magnetic flux density of the first magnetic track (21) and the maximum magnetic flux density of the second magnetic track (22) is within a predetermined range.

3.  The absolute magnetic encoder (1) according to claim 1 or 2, wherein an end portion on inner diameter side of the first magnetic track (21) and an end portion on outer diameter side of the second magnetic track (22) come into contact.

4.  The absolute magnetic encoder (1) according to claim 1 or 2, wherein the first magnetic track (21) and the second magnetic track (22) respectively comprise a multipolar magnet made of magnetic rubber material, the first detected face (21a) and the second detected face (22a) are configured in such a manner that the first magnetic track (21) and the second magnetic track (22) are supported by a single support member.

5.  The absolute magnetic encoder (1) according to claim 1 or 2, wherein the maximum magnetic flux density of the first magnetic track (21) and the maximum magnetic flux density of the second magnetic track (22) are calculated based on equation (1),

$$B = Bo \exp\left(-n \cdot x/d\right) \quad (1)$$

    in which "B" is magnetic flux density, "Bo" is residual magnetic flux density, "n" is total number of poles, "x" is an air gap between the detected faces (21a, 22a) and the magnetic sensor unit (30), and "d" is a diameter where magnetism detection elements (31, 32) of the magnetic sensor unit (30) are provided.

6.  The absolute magnetic encoder (1) according to claim 5, wherein the dimension (L) of the level difference (23) is set based on difference between an air gap "x1" relative to the first detected face (21a) and an air gap "x2" relative to the second detected face (22a) in which difference between the maximum magnetic flux density of the first magnetic track (21) and the maximum magnetic flux density of the second magnetic track (22) is within a predetermined range.

7. The absolute magnetic encoder (1) according to claim 1 or 2, wherein total number of each type of pole of the first magnetic track (21) is "m" and total number of each type of pole of the second magnetic track (22) is (m-2).

8. A method for setting an absolute magnetic encoder (1) in which the absolute magnetic encoder (1) comprises a first magnetic track (21) comprising an annular multipolar magnet in which magnetic poles are alternately provided at equal intervals in circumferential direction, a second magnetic track (22) comprising an annular multipolar magnet in which magnetic poles are alternately provided at equal intervals in circumferential direction, number of magnetic poles of the second magnetic track (22) being different from number of magnetic poles of the first magnetic track (21), the second magnetic track (22) being provided concentrically with the first magnetic track (21) inside the first magnetic track (21) in radial direction, and a magnetic sensor unit (30) to detect each of magnetic flux density of the first magnetic track (21) and magnetic flux density of the second magnetic track (22), the magnetic sensor unit (30) being provided opposite to the first magnetic track (21) in axial direction of the first magnetic track (21) and opposite to the second magnetic track (22) in axial direction of the second magnetic track (22), the magnetic sensor unit (30) being provided so as to be relatively movable to the first magnetic track (21) and the second magnetic track (22) respectively,

characterized in that the method comprises
a step of obtaining maximum magnetic flux density of the first magnetic track (21) which is detected by a position of the magnetic sensor unit (30),
a step of obtaining maximum magnetic flux density of the second magnetic track (22) which is detected by a position of the magnetic sensor unit (22), and
a step of setting level difference (23) in axial direction between the first detected face (21a) of the first magnetic track (21) and the second detected face (22a) of the second magnetic track (22) based on difference between obtained maximum magnetic flux density of the first magnetic track (21) and obtained maximum magnetic flux density of the second magnetic track (22), the first detected face (21a) being a magnetic pole face of the first magnetic track (21) opposite to the magnetic sensor unit (30), the second detected face (22a) being a magnetic pole face of the second magnetic track (22) opposite to the magnetic sensor unit (30).

9. The method for setting an absolute magnetic encoder (1) according to claim 8, wherein dimension (L) of the level difference (23) is set in such a manner that difference between the maximum magnetic flux density of the first magnetic track (21) and the maximum magnetic flux density of the second magnetic track (22) is within a predetermined range.

10. The method for setting an absolute magnetic encoder (1) according to claim 8 or 9, wherein the maximum magnetic flux density of the first magnetic track (21) and the maximum magnetic flux density of the second magnetic track (22) are calculated based on equation (2),

$$B = Bo \exp\left(-n \cdot x/d\right) \quad (2)$$

in which "B" is magnetic flux density, "Bo" is residual magnetic flux density, "n" is total number of poles, "x" is an air gap between the detected faces (21a, 22a) and the magnetic sensor unit (30), and "d" is a diameter where magnetism detection elements (31, 32) of the magnetic sensor unit (30) are provided.

11. The method for setting an absolute magnetic encoder (1) according to claim 10, the dimension (L) of the level difference (23) is set based on difference between an air gap "x1" relative to the first detected face (21a) and an air gap "x2" relative to the second detected face (22a) in which difference between the maximum magnetic flux density of the first magnetic track (21) and the maximum magnetic flux density of the second magnetic track (22) is within a predetermined range.

**Patentansprüche**

1. Magnetischer Absolutwertencoder (1), aufweisend:

eine erste Magnetspur (21) mit einem ringförmigen mehrpoligen Magneten, bei dem die Magnetpole abwechselnd in gleichen Abständen in Umfangsrichtung vorgesehen sind;
eine zweite Magnetspur (22) mit einem ringförmigen mehrpoligen Magneten, bei dem die Magnetpole abwechselnd in gleichen Abständen in Umfangsrichtung vorgesehen sind, wobei sich die Anzahl der Magnetpole der zweiten Magnetspur (22) von der Anzahl der Magnetpole der ersten Magnetspur (21) unterscheidet und die zweite Magnetspur (22) innerhalb der ersten Magnetspur (21) in radialer Richtung konzentrisch mit der ersten Magnetspur (21) vorgesehen ist;

eine magnetische Sensoreinheit (30), um jeweils die magnetische Flussdichte der ersten Magnetspur (21) und die magnetische Flussdichte der zweiten Magnetspur (22) zu erfassen, wobei die magnetische Sensoreinheit (30) der ersten Magnetspur (21) in axialer Richtung der ersten Magnetspur (21) gegenüberliegend und der zweiten Magnetspur (22) in axialer Richtung der zweiten Magnetspur (22) gegenüberliegend vorgesehen ist, wobei die magnetische Sensoreinheit (30) jeweils relativ zu der ersten Magnetspur (21) und der zweiten Magnetspur (22) bewegbar vorgesehen ist;

eine erste Erfassungsfläche (21a), die eine Magnetpolfläche der ersten Magnetspur (21) ist, die der magnetischen Sensoreinheit (30) gegenüberliegt; und

eine zweite Erfassungsfläche (22a), die eine Magnetpolfläche der zweiten Magnetspur (22) ist, die der magnetischen Sensoreinheit (30) gegenüberliegt; wobei die erste Erfassungsfläche (21a) und die zweite Erfassungsfläche (22a) mit einer Höhendifferenz (23) in axialer Richtung versehen sind,

**dadurch gekennzeichnet, dass**

die Höhendifferenz (23) auf der Grundlage der Differenz zwischen der maximalen magnetischen Flussdichte der ersten Magnetspur (21) und der maximalen magnetischen Flussdichte der zweiten Magnetspur (22), die von der magnetischen Sensoreinheit (30) erfasst werden, eingestellt ist.

2. Magnetischer Absolutwertencoder (1) nach Anspruch 1, wobei eine Abmessung (L) der Höhendifferenz (23) so eingestellt ist, dass die Differenz zwischen der maximalen magnetischen Flussdichte der ersten Magnetspur (21) und der maximalen magnetischen Flussdichte der zweiten Magnetspur (22) innerhalb eines vorgegebenen Bereichs liegt.

3. Magnetischer Absolutwertencoder (1) nach Anspruch 1 oder 2, wobei ein Endabschnitt auf der Seite des Innendurchmessers der ersten Magnetspur (21) und ein Endabschnitt auf der Seite des Außendurchmessers der zweiten Magnetspur (22) in Kontakt gelangen.

4. Magnetischer Absolutwertencoder (1) nach Anspruch 1 oder 2, wobei die erste Magnetspur (21) und die zweite Magnetspur (22) jeweils einen mehrpoligen Magneten aus magnetischem Gummimaterial umfassen, wobei die erste Erfassungsfläche (21a) und die zweite Erfassungsfläche (22a) so ausgelegt sind, dass die erste Magnetspur (21) und die zweite Magnetspur (22) von einem einzelnen Trägerelement getragen werden.

5. Magnetischer Absolutwertencoder (1) nach Anspruch 1 oder 2, wobei die maximale magnetische Flussdichte der ersten Magnetspur (21) und die maximale magnetische Flussdichte der zweiten Magnetspur (22) auf der Grundlage der Gleichung (1) berechnet werden,

$$B = Bo\exp(-n \bullet x/d) \qquad (1)$$

wobei "B" die magnetische Flussdichte ist, "Bo" die remanente magnetische Flussdichte ist, "n" die Gesamtzahl an Polen ist, "x" ein Luftspalt zwischen den Erfassungsflächen (21a, 22a) und der magnetischen Sensoreinheit (30) ist und "d" ein Durchmesser ist, an dem Magnetismuserfassungselemente (31, 32) der magnetischen Sensoreinheit (30) vorgesehen sind.

6. Magnetischer Absolutwertencoder (1) nach Anspruch 5, wobei die Abmessung (L) der Höhendifferenz (23) auf der Grundlage der Differenz zwischen einem Luftspalt "x1" relativ zu der ersten Erfassungsfläche (21a) und einem Luftspalt "x2" relativ zu der zweiten Erfassungsfläche (22a) eingestellt ist, bei der die Differenz zwischen der maximalen magnetischen Flussdichte der ersten Magnetspur (21) und der maximalen magnetischen Flussdichte der zweiten Magnetspur (22) innerhalb eines vorgegebenen Bereichs liegt.

7. Magnetischer Absolutwertencoder (1) nach Anspruch 1 oder 2, wobei die Gesamtzahl jedes Poltyps der ersten Magnetspur (21) "m" ist und die Gesamtzahl jedes Poltyps der zweiten Magnetspur (22) (m-2) ist.

8. Verfahren zum Einstellen eines magnetischen Absolutwertencoders (1), wobei der magnetische Absolutwertencoder (1) eine erste Magnetspur (21) mit einem ringförmigen mehrpoligen Magneten, in dem Magnetpole abwechselnd in gleichen Abständen in Umfangsrichtung vorgesehen sind, eine zweite Magnetspur (22) mit einem ringförmigen mehrpoligen Magneten, in dem Magnetpole abwechselnd in gleichen Abständen in Umfangsrichtung vorgesehen sind, wobei sich die Anzahl der Magnetpole der zweiten Magnetspur (22) von der Anzahl der Magnetpole der ersten Magnetspur (21) unterscheidet und wobei die zweite Magnetspur (22) innerhalb der ersten Magnetspur (21) in radialer Richtung konzentrisch mit der ersten Magnetspur (21) vorgesehen ist, sowie eine magnetische Sensoreinheit (30) enthält, um jeweils die magnetische Flussdichte der ersten Magnetspur (21) und die magnetische Flussdichte der zweiten Magnetspur (22) zu erfassen, wobei die magnetische Sensoreinheit (30) der ersten Magnetspur (21) in axialer Richtung der ersten Magnetspur (21) gegenüberliegend und der zweiten Magnetspur (22) in axialer Richtung der zweiten Magnetspur (22) gegenüberliegend vorgesehen ist, wobei die magnetische Sensoreinheit (30) jeweils relativ zu der ersten Magnetspur (21) und der zweiten Magnetspur (22) bewegbar vorgesehen ist;

**dadurch gekennzeichnet, dass** das Verfahren umfasst

einen Schritt des Erhaltens der maximalen magnetischen Flussdichte der ersten Magnetspur (21), die durch eine Position der magnetischen Sensoreinheit (30) erfasst wird,

einen Schritt des Erhaltens der maximalen magnetischen Flussdichte der zweiten Magnetspur (22), die durch eine Position der magnetischen Sensoreinheit (22) erfasst wird, und

einen Schritt des Einstellens einer Höhendifferenz (23) in axialer Richtung zwischen der ersten Erfassungsfläche (21a) der ersten Magnetspur (21) und der zweiten Erfassungsfläche (22a) der zweiten Magnetspur (22) basierend auf der Differenz zwischen der erhaltenen maximalen magnetischen Flussdichte der ersten Magnetspur (21) und der erhaltenen maximalen magnetischen Flussdichte der zweiten Magnetspur (22), wobei die erste Erfassungsfläche (21a) eine der der magnetischen Sensoreinheit (30) gegenüberliegende Magnetpolfläche der ersten Magnetspur (21) ist und die zweite Erfassungsfläche (22a) eine der magnetischen Sensoreinheit (30) gegenüberliegende Magnetpolfläche der zweiten Magnetspur (22) ist.

9. Verfahren zum Einstellen eines magnetischen Absolutwertencoders (1) nach Anspruch 8, wobei eine Abmessung (L) der Höhendifferenz (23) so eingestellt wird, dass die Differenz zwischen der maximalen magnetischen Flussdichte der ersten Magnetspur (21) und der maximalen magnetischen Flussdichte der zweiten Magnetspur (22) innerhalb eines vorbestimmten Bereichs liegt.

10. Verfahren zum Einstellen eines magnetischen Absolutwertencoders (1) nach Anspruch 8 oder 9, wobei die maximale magnetische Flussdichte der ersten Magnetspur (21) und die maximale magnetische Flussdichte der zweiten Magnetspur (22) auf der Grundlage der Gleichung (2) berechnet werden,

$$B = Bo \exp (-n \bullet x/d) \qquad (2)$$

wobei "B" die magnetische Flussdichte ist, "Bo" die remanente magnetische Flussdichte ist, "n" die Gesamtzahl an Polen ist, "x" ein Luftspalt zwischen den Erfassungsflächen (21a, 22a) und der magnetischen Sensoreinheit (30) ist und "d" ein Durchmesser ist, an dem Magnetismuserfassungselemente (31, 32) der magnetischen Sensoreinheit (30) vorgesehen sind.

11. Verfahren zum Einstellen eines magnetischen Absolutwertencoders (1) nach Anspruch 10, wobei die Abmessung (L) der Höhendifferenz (23) basierend auf der Differenz zwischen einem Luftspalt "x1" relativ zu der ersten Erfassungsfläche (21a) und einem Luftspalt "x2" relativ zu der zweiten Erfassungsfläche (22a) eingestellt wird, bei der die Differenz zwischen der maximalen magnetischen Flussdichte der ersten magnetischen Spur (21) und der maximalen magnetischen Flussdichte der zweiten magnetischen Spur (22) innerhalb eines vorbestimmten Bereichs liegt.

## Revendications

1. Encodeur magnétique absolu (1), comprenant :

une première piste magnétique (21) comprenant un aimant multipolaire annulaire, dans lequel des pôles magnétiques sont fournis en alternances à des intervalles égaux dans la direction circonférentielle ;

une deuxième piste magnétique (22) comprenant un aimant multipolaire annulaire, dans lequel des pôles magnétiques sont fournis en alternance à des intervalles égaux dans la direction circonférentielle, le nombre de pôles magnétiques de la deuxième piste magnétique (22) étant différent du nombre de pôles magnétiques de la première piste magnétique (21), la deuxième piste magnétique (22) étant fournie de manière concentrique avec la première piste magnétique (21) à l'intérieur de la première piste magnétique (21) dans la direction radiale ; une unité de capteur magnétique (30) pour détecter respectivement une densité de flux magnétique de la première piste magnétique (21) et une densité de flux magnétique de la deuxième piste magnétique (22), l'unité de capteur magnétique (30) étant fournie à l'opposé de la première piste magnétique (21) dans la direction axiale de la première piste magnétique (21) et à l'opposé de la deuxième piste magnétique (22) dans la direction axiale de la deuxième piste magnétique (22), l'unité de capteur magnétique (30) étant fournie de manière relativement mobile vers la première piste magnétique (21) et la deuxième piste magnétique (22) respectivement ;

une première face détectée (21a) qui est une face de pôle magnétique de la première piste magnétique (21) à l'opposé de l'unité de capteur magnétique (30) ; et

une deuxième face détectée (22a) qui est une face de pôle magnétique de la deuxième piste magnétique (22) à l'opposé de l'unité de capteur magnétique (30) ;

dans lequel la première face détectée (21a) et la deuxième face détectée (22a) sont fournies avec une différence de niveau (23) dans la direction axiale,

**caractérisé en ce que**

la différence de niveau (23) est réglée sur la base d'une différence entre une densité de flux magnétique maximale de la première piste magnétique (21) et une densité de flux magnétique maximale de la deuxième piste magnétique (22) qui sont détectées par l'unité de capteur magnétique (30).

2. Encodeur magnétique absolu (1) selon la revendication 1, dans lequel une dimension (L) de la différence de niveau (23) est réglée de telle manière que la différence entre la densité de flux magnétique maximale de la première piste magnétique (21) et la densité de flux magnétique maximale de la deuxième piste magnétique (22) se situe dans une plage prédéterminée.

3. Encodeur magnétique absolu (1) selon la revendication 1 ou 2, dans lequel une partie d'extrémité sur un côté de diamètre intérieur de la première piste magnétique (21) et une partie d'extrémité sur un côté de diamètre extérieur de la deuxième piste magnétique (22) viennent en contact.

4. Encodeur magnétique absolu (1) selon la revendication 1 ou 2, dans lequel la première piste magnétique (21) et la deuxième piste magnétique (22) comprennent respectivement un aimant multipolaire fait d'un matériau en caoutchouc magnétique, la première face détectée (21a) et la deuxième face détectée (22a) sont configurées de telle manière que la première piste magnétique (21) et la deuxième piste magnétique (22) sont supportées par un unique élément de support.

5. Encodeur magnétique absolu (1) selon la revendication 1 ou 2, dans lequel la densité de flux magnétique maximale de la première piste magnétique (21) et la densité de flux magnétique maximale de la deuxième piste magnétique (22) sont calculées sur la base d'une équation (1),

$$B = Bo\exp\left(-n \bullet x/d\right) \qquad (1)$$

dans laquelle « B » est une densité de flux magnétique, « Bo » est une densité de flux magnétique résiduelle, « n » est un nombre total de pôles, « x » est un entrefer entre les faces détectées (21a, 22a) et l'unité de capteur magnétique (30), et « d » est un diamètre où des éléments de détection de magnétisme (31, 32) de l'unité de capteur magnétique (30) sont fournis.

6. Encodeur magnétique absolu (1) selon la revendication 5, dans lequel la dimension (L) de la différence de niveau (23) est définie sur la base d'une différence entre un entrefer « x1 » par rapport à la première face détectée (21a) et un entrefer « x2 » par rapport à la deuxième face détectée (22a), où la différence entre la densité de flux magnétique maximale de la première piste magnétique (21) et la densité de flux magnétique maximale de la deuxième piste magnétique (22) se situe dans une plage prédéterminée.

7. Encodeur magnétique absolu (1) selon la revendication 1 ou 2, dans lequel un nombre total de chaque type de pôle de la première piste magnétique (21) est « m » et un nombre total de chaque type de pôle de la deuxième piste magnétique (22) est (m-2).

8. Procédé de réglage d'un encodeur magnétique absolu (1), dans lequel l'encodeur magnétique absolu (1) comprend une première piste magnétique (21) comprenant un aimant multipolaire annulaire, dans lequel des pôles magnétiques

EP 4 130 681 B1

sont fournis en alternance à des intervalles égaux dans la direction circonférentielle, une deuxième piste magnétique (22) comprenant un aimant multipolaire annulaire, dans lequel des pôles magnétiques sont fournis en alternance à des intervalles égaux dans la direction circonférentielle, le nombre de pôles magnétique de la deuxième piste magnétique (22) étant différent du nombre de pôles magnétiques de la première piste magnétique (21), la deuxième piste magnétique (22) étant fournie de manière concentrique avec la première piste magnétique (21) à l'intérieur de la première piste magnétique (21) dans la direction radiale, et une unité de capteur magnétique (30) pour détecter chacune de la densité de flux magnétique de la première piste magnétique (21) et la densité de flux magnétique de la deuxième piste magnétique (22), l'unité de capteur magnétique (30) étant fournie à l'opposé de la première piste magnétique (21) dans la direction axiale de la première piste magnétique (21) et à l'opposé de la deuxième piste magnétique (22) dans la direction axiale de la deuxième piste magnétique (22), l'unité de capteur magnétique (30) étant fournie de manière relativement mobile vers la première piste magnétique (21) et la deuxième piste magnétique (22) respectivement,

**caractérisé en ce que** le procédé comprend
une étape d'obtention de la densité de flux magnétique maximale de la première piste magnétique (21) qui est détectée par une position de l'unité de capteur magnétique (30),
une étape d'obtention d'une densité de flux magnétique maximale de la deuxième piste magnétique (22) qui est détectée par une position de l'unité de capteur magnétique (22), et
une étape de réglage d'une différence de niveau (23) dans la direction axiale entre la première face détectée (21a) de la première piste magnétique (21) et la deuxième face détectée (22a) de la deuxième piste magnétique (22) sur la base d'une différence entre une densité de flux magnétique maximale obtenue de la première piste magnétique (21) et une densité de flux magnétique maximale obtenue de la deuxième piste magnétique (22), la première face détectée (21a) étant une face de pôle magnétique de la première piste magnétique (21) à l'opposé de l'unité de capteur magnétique (30), la deuxième face détectée (22a) étant une face de pôle magnétique de la deuxième piste magnétique (22) à l'opposé de l'unité de capteur magnétique (30).

9. Procédé de réglage d'un encodeur magnétique absolu (1) selon la revendication 8, dans lequel une dimension (L) de la différence de niveau (23) est réglée de telle manière qu'une différence entre la densité de flux magnétique maximale de la première piste magnétique (21) et la densité de flux magnétique maximale de la deuxième piste magnétique (22) se situe dans une plage prédéterminée.

10. Procédé de définition d'un encodeur magnétique absolu (1) selon la revendication 8 ou 9, dans lequel la densité de flux magnétique maximale de la première piste magnétique (21) et la densité de flux magnétique maximale de la deuxième piste magnétique (22) sont calculées sur la base d'une équation (2),

$$B = Bo \exp (-n \bullet x/d) \qquad (2)$$

dans laquelle « B » est une densité de flux magnétique, « Bo » est une densité de flux magnétique résiduelle, « n » est un nombre total de pôles, « x » est un entrefer entre les faces détectées (21a, 22a) et l'unité de capteur magnétique (30), et « d » est un diamètre où des éléments de détection de magnétisme (31, 32) de l'unité de capteur magnétique (30) sont fournis.

11. Procédé de définition d'un encodeur magnétique absolu (1) selon la revendication 10, dans lequel la dimension (L) de la différence de niveau (23) est réglée sur la base d'une différence entre un entrefer « x1 » par rapport à la première face détectée (21a) et un entrefer « x2 » par rapport à la deuxième face détectée (22a), où la différence entre la densité de flux magnétique maximale de la première piste magnétique (21) et la densité de flux magnétique maximale de la deuxième piste magnétique (22) se situe dans une plage prédéterminée.

*FIG. 1A*

*FIG. 1B*

*FIG. 2*

*FIG. 3*

FIG. 4A

FIG. 4B

*FIG. 5A*

*FIG. 5B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2579002 A1
- JP 2009265099 A
- JP 2011080776 A
- JP H10170212 A
- JP H9311053 A